# EUROPÄISCHE PATENTSCHRIFT

(11) **EP 2 144 972 B1**
(45) Veröffentlichungstag und Bekanntmachung des Hinweises auf die Patenterteilung: **09.04.2014**
(21) Anmeldenummer: 08749318.5
(22) Anmeldetag: 05.05.2008
(51) Int. Cl.: C09D 183/08, C08L 83/16

(54) **HYDROPHOBE UND KRATZFESTE LACKE FÜR METALLISCHE OBERFLÄCHEN UND BREMSSTAUBABWEISENDE RADBESCHICHTUNGEN**
HYDROPHOBIC AND SCRATCH-RESISTANT PAINTS FOR METAL SURFACES AND BRAKE DUST-REPELLING WHEEL COATINGS
LAQUE HYDROPHOBE ET RÉSISTANT À LA RAYURE POUR SURFACES MÉTALLIQUES ET REVÊTEMENTS DE ROUES REPOUSSANT LES POUSSIÈRES DE FREINAGE

(30) Priorität: 04.05.2007 DE 102007020978; 06.11.2007 DE 202007018435 U
(43) Veröffentlichungstag der Anmeldung: 20.01.2010
(73) Patentinhaber: Daimler AG, 70327 Stuttgart (DE)
(72) Erfinder: KRANNICH, Hartmut, 86573 Obergriesbach (DE); MEHNERT, Reiner, 04416 Markkleeberg (DE); REISER, Judith, 70599 Stuttgart (DE); WESELOH, Susanne, 71063 Sindelfingen (DE)
(74) Vertreter: JENSEN & SON
(86) Internationale Anmeldenummer: PCT/EP2008/003589
(87) Internationale Veröffentlichungsnummer: WO 2008/135262

(56) Entgegenhaltungen:
- EP-A- 0 796 904
- WO-A-2004/056899
- WO-A-2005/085374
- DE-B- 1 253 847
- US-A- 4 795 783
- US-A1- 2006 194 707
- US-A1- 2006 270 770

## Beschreibung

Die Erfindung betrifft hydrophobe und kratzfeste Lacke, insbesondere zur Beschichtung von metallischen Oberflächen sowie Lackierungen auf Kraftfahrzeugrädern, wobei die Lackierung eine organische Binderkomponente, eine anorganische Netzwerkkomponente, die während der Aushärtung aus Organosilazan/Organosilan-Mischung-Precursoren entsteht und eine Verbesserung der mechanischen Eigenschaften ergibt, und eine polysiloxan-basierte Hydrophobisierungskomponente aufweist. Insbesondere sind bremsstaubabweisende Beschichtungen von Aluminium oder Leichtmetallfelgen im Automobilbau betroffen.

In aller Regel werden Leichtmetallfelgen im Fertigungsprozess mit einer Lackierung versehen, die in der Regel aus einer Vorbehandlung des Aluminiums, einer Grundierung, einem pigmentierten Basislack und einer Klarlackschicht besteht.

Die üblichen Lackierungen weisen im Allgemeinen nicht die erforderliche Kratzfestigkeit auf, um dauerhaften Glanz gegenüber der Reinigung der Aluminiumfelgen mit abrasiven Mitteln, wie Bürsten oder Spülschwämme oder der Einwirkung von Schneeketten sicher zu stellen.

Ein weiteres Problem stellt die Verschmutzung der Radfelgen dar. Zum einen sind sie der Quelle sich permanent neu bildender Bremsstäube in Form von Scheibenbremsanlagen ausgesetzt und zum anderen sind die Felgen aufgrund ihrer Geometrie nur schwierig zu reinigen. Die Bremsstäube haften aufgrund ihrer Konsistenz jedoch vergleichsweise gut auf den üblichen Lackoberflächen und sind aufgrund ihrer schwarzen Färbung optisch sehr auffällig.

Häufig werden hydrophobe Lackierungen verwendet, um die Anhaftung zu verringern. Konventionelle Lacke haben dabei in der Regel Hydrophobisierungs-Additive aus perfluorierten Organosilanen, Silikonölen, Polydimethylsiloxanen oder modifizierten Siloxanen. Bei der Aushärtung der flüssigen Beschichtungen werden diese Additive chemisch nicht verändert und auch nicht in das polymere Netzwerk eingebunden. Die mit der Polymermatrix unverträglichen Additive diffundieren mit der Zeit an die Oberfläche der Beschichtung und werden schließlich an die Umgebung der Beschichtung abgegeben. Deutlich messbar wird dieser Prozess durch die Erhöhung der Oberflächenenergie einer solchen Beschichtung während einer beschleunigten Bewitterung, z.B. im Xenontest nach ISO 11 341. Die Wirksamkeit vieler dieser Additive nimmt bereits nach 250 bis 500 Stunden beschleunigter Bewitterung stark ab. Die Oberflächenenergie steigt auf einen Wert, der für die Beschichtung ohne Hydrophobierungsadditiv charakteristisch ist. Damit ist diese Art der Hydrophobierung von Beschichtungen nur bedingt für Oberflächen mit Außenanwendungen geeignet.

Wird eine Außenanwendung der Lackierung wie z.B. im Automobilbereich angestrebt, sollte die Hydrophobierungswirkung unter realen Witterungsbedingungen und unter mechanischer Beanspruchung möglichst über Jahre anhalten. Dies erfordert insbesondere für Radbeschichtungen ein hohes Maß an Kratzfestigkeit.

Es sind neuerdings auch hydrophile Lacksysteme für Felgenbeschichtungen bekannt. Aus der DE 10 2004 001 288 A1 sind hydrophile Beschichtungen für Oberflächen, insbesondere für Anti-Beschlag-Ausrüstung für Spiegel, Autoscheinwerfer, etc. bekannt, die ein oder mehrere Polysilazane und ein ionisches Reagens oder Mischungen von ionischen Reagenzien enthalten. Das Polysilazan ist ein Polysilazan der Formel -(SiR'R''-NR''')ₙ insbesondere ein Perhydropolysilazan (R'=R''=R'''=H). Das ionische Reagens ist vorzugsweise ein Salz einer Carbonsäure, insbesondere einer Hydroxycarbonsäure, oder ein kationisches oder anionisches Silan oder ein Oligomer oder Polymer.

Eine weitere auf Perhydropolysilazanen basierende Beschichtung ist aus der DE 102004011212 A1 bekannt. Bevorzugt werden ein oder mehrere Co-Bindemittel, aus Polysilazan der Formel -(SiR'R''-NR''')ₙ oder aus Cellulosederivaten, Polyestern, Phenol- oder Melaminharzen, Acrylaten, Epoxiden oder Polyisocyanaten zugesetzt. Die Lackierung ist insbesondere geeignet als Schutzbeschichtung für Felgen, insbesondere für Aluminiumfelgen.

Aus der DE 102004011213 A1 sind ebenfalls hydrophile selbstreinigende Schutzschichten, insbesondere für Autofelgen bekannt, die superhydrophile, transparente und photokatalytische Eigenschaften aufweisen. Die Beschichtung basiert auf Poly-Perhydrosilazanen der allgemeinen Formel-[Si(H)₂-N(H)-]ₙ. Sie enthalten außerdem noch photokatalytisch aktives TiO₂, das zu oxidativem Angriff auf die Schmutzablagerungen führt.

Aus der DE 10 2004 059 152 A1 sind anti-adhäsiv wirkende Beschichtungs-Zusammensetzungen mit hoher Temperaturbeständigkeit, beispielsweise für Antihaft-Innenverkleidungen von Backröhren oder "easy-to-clean"-Beschichtung im Bereich von Herdplatten. Die Beschichtungslösungen sind Mischungen aus Metall- und/oder Halbmetall-Alkoxiden, funktionalisierten oder nichtfunktionalisierten Organosilanen der allgemeinen Formel R²ₓSi(R³)₄₋ₓ und fluorierten oder perfluorierten Polymeren und/oder Organosilanen mit fluorhaltiger Seitenkette.

Aus der US 578 0530 sind Beschichtungen für unterschiedlichste Außenanwendungen bekannt, welche thermisch vernetzende Harze mit den Komponenten (a) beschichtungsbildende Polyol-bildende Harze, (b) Bindemitteln, insbesondere auf der Basis von geblockten Polyisocyanaten und Aminoplastharzen und (c) ultrafeinen Silikatpartikeln, insbesondere aus der Hydrolyse und Polykondensation von Tetramethylorthosilikat (TMOS) sowie (d) Katalysatoren umfassen.

Aus der US 2006194707 A1 ist eine härtbare Zusammensetzung aus einem funktionalisierten Siloxan und einem Vernetzer aus der Gruppe der multi-funktionalen Silane, amino funktionalen Silane, epoxy funktionalen Silane und/oder Silazane bekannt.

Aus der EP 0796904 A2 ist eine thermisch härtbare Beschichtungszusammensetzung bekannt, die ein filmbildendes Polyol-Harz, ein Bindemittel zur Reaktion mit dem Polyol-Harz, ein Hydrolysat bzw. Polykondensat von tri- oder Tetraalkoxysilan und einen Katalysator für die Reaktion zwischen dem Polyol-Harz und dem Bindemittel enthält.

Aus der WO 2004/056899 A1 ist eine Kunststoffdispersionen zur Herstellung von hydrophoben Oberflächen bekannt. Die Kunststoffdispersion besteht dabei aus einer wässrigen Lösung von hydrophilen Melaminharzvorkondensaten und latenten Härtungskatalysatoren, Nanotröpfchen oder -partikel aus wasserunlöslichen veretherten Melaminharzvorkondensaten mit Härtungskatalysatoren und Hydrophobierungsmittel, sowie Dispergatoren.

Die bekannten Lackierungen besitzen teils zu geringe schmutzabweisende Wirkung oder teils zu geringe Kratzfestigkeit. Zudem sind die aufgeführten Si-Sonderpolymere in der Regel vergleichsweise teuer.

Es ist daher Aufgabe der Erfindung einen kostengünstigen Lack oder Beschichtung für die Bildung von schmutzabweisenden und kratzfesten Lackierungen, insbesondere einen Lack zum Auftragen auf Leichtmetallfelgen, bereit zu stellen sowie eine schmutzabweisende und kratzfeste Lackierung auf Kraftfahrzeugrädern aufzuzeigen.

Die Aufgabe wird erfindungsgemäß gelöst durch einen Hydrophoben und kratzfesten Lack, insbesondere zur Beschichtung von metallischen Oberflächen, enthaltend
- (A) organische Binder mit freien -OH-Gruppen,
- (B) Netzwerkbildner welche während der Aushärtung der flüssigen Beschichtungen ein anorganisches Silikat-Netzwerk bilden aus Mischungen von
   (B1) teilhydrolysierten und teilpolykondensierten Organosilazan-Mischungen,
   (B2) teilhydrolysierten und teilpolykondensierten Organosilan-Mischungen,
- (C) Polysiloxane mit freien -OH-Gruppen
- Lösungsmittel und
- Additive,
   mit den Merkmalen des Anspruchs 1.

Weitere Lösungen der erfindungsgemäßen Aufgabe finden sich in einem Verfahren zur Herstellung einer Lackierung umfassend die Schritte,
- Auftragen der Lacks mittels Streich- oder Sprühverfahren
- Lufttrocknung der Lackschicht,
- Einbrennen des Lacks bei einer Temperatur von 130 bis 180°C unter Polykondensation der Organosilazan- und Organosilan-Mischung (B) und Co-Kondensation mit den Polysiloxanen (C) mit den Merkmalen des Anspruchs 18,
sowie in einer Lackierung auf Kraftfahrzeugrädern zur Verringerung der Bremsstaubhaftung, umfassend eine organische Binderkomponente, eine polykondensierte

Organosilazan/Organosilan-Mischung, die ein anorganisches Silikat-Netzwerk bildet und als Kratzfestkomponente sowie als Hydrohobisierungsmittel wirkt und eine Alkyl-, oder Aryl-Polysiloxan-basierte Hydrophobisierungskomponente, wobei die vier Komponenten im wesentlichen kovalent, d.h. über -Si-O-Si-Brücken aneinander gebunden sind und die Hydrophobisierungskomponente an der Lackoberseite angereichert und immobilisiert vorliegt mit den Merkmalen des Anspruchs 19.

Der erste Aspekt der Erfindung umfasst somit einen Lack, für eine hydrophobe, schmutzabweisende und kratzfeste Lackierung, der als wesentliche Komponenten organische Bindemittel, eine Organosilazan/Organosilan-Mischung als Precursor für ein anorganisches silikatisches Netzwerk und ein reaktives Hydrophobisierungsadditiv umfasst. Das silikatische Netzwerk der Lackierung hat dabei die Eigenschaften einer hydrophoben Kratzfestkomponente. Der Lack enthält des Weiteren Lösungsmittel sowie Lack-übliche Additive.

Für den Lack ist es von wesentlicher Bedeutung, dass die Komponenten so gewählt sind, dass bei der Lackierung eine chemische Anbindung des Hydrophobisierungsadditivs (C) an das in die organischen Binder (A) eingelagerte anorganische silikatische Netzwerk (B) stattfinden kann. Unter diesem silikatischen Netzwerk sind die Polykondensationsprodukte der Komponente (B) zu verstehen, die aus Polykondensation zwischen (B1) und (B1), (B2) und (B2) sowie zwischen (B1) und (B2) gebildet werden. Dies sind beispielsweise die Polykondensationsprodukte aus teilhydrolysierten Polymethyl(hydro)polysilazan und Alkyloxy- oder Aryloxy-Silanen. Die kovalente Bindung des Hydrophobisierungsadditivs erfolgt dabei über die Hydroxylgruppen des anorganischen silikatischen Netzwerks mit den freien und reaktiven OH-Gruppen des Hydrophobisierungsadditivs. Zusätzlich findet in der Lackierung außerdem noch eine Anbindung an freie und reaktive OH- und/oder NH-/NH₂-Gruppen des organischen Binders statt.

Die organischen Binder können aufgrund reaktiver OH- und/oder NH-/NH₂-Gruppen ebenso mit den teilhydrolysierten, sowie den teilkondensierten, bzw.vorkondensierten Komponenten (B1) und/oder (B2), insbesondere den Polykondensationsprodukten von Polymethyl(hydro)polysilazan /Alkyloxy- oder Aryloxy-Silan Mischungen kovernetzt werden, wodurch die Kratzfestkomponente fest in das organische Bindersystem eingebunden ist.

Eine erste Komponente (A) des erfindungsgemäßen Lacks sind organische Binder mit freien -OH-Gruppen. Dabei kann es sich beispielsweise um Polymerisationsharze oder Kondensationsharze, beispielsweise Aminoplaste, insbesondere Harnstoff- und Melaminformaldehydharze, Alkydharze, Acrylharze, Polyester oder modifizierte Polyester, Epoxide, Polyisocyanate bzw. blockierte Polyisocyanate oder Polysiloxane handeln.

Besonders bevorzugte organischen Binder (A) sind aus Harnstoff- und Melaminformaldehyd-harzen, Alkydharzen, Acrylharzen, Polyestern oder modifizierten Polyestern, Epoxidharzen, Polyisocyanaten und/oder Acrylaten, insbesondere den Systemen Acrylat/Melamin-, Polyester/Melamin-, Alkyd/Melamin-, oder selbstvernetzenden Acrylat- und Epoxid-Harzen, gebildet, die einen Anteil an freien OH-Gruppen oder OH- und NH-/NH₂-Gruppen aufweisen. Freie OH- und/oder NH-/NH₂-Gruppen können sowohl diejenigen OH- und/oder NH-/NH₂-Gruppen sein, welche zur Vernetzung/Aushärtung des organischen Binders dienen, als auch weitere OH- und/oder NH-/NH₂-Gruppen, die an der Binderaushärtung nicht unmittelbar teilnehmen. Da die OH- und/oder NH-/NH₂-Gruppen gegebenenfalls der Binder-Aushärtungsreaktion durch Vernetzung mit der Kratzfestkomponente, bzw. der Komponente (B) entzogen werden, ist bei diesen Lacken ein entsprechender Überschuss an OH-Gruppen-haltigen Binderkomponenten vorzusehen.

Eine zweite Komponente (B) des erfindungsgemäßen Lacks sind Mischungen aus teilhydrolysierten und teilkondensierten Polyalky(hydro)polysilazanen (B1) und teilhydrolysierten und teilkondensierten Alkyloxy- oder Aryloxy-Silanen (B2), die zur Bildung eines anorganischen silikatischen Netzwerkes geeignet sind, das durch deren Polykondensation entsteht.

Bei den nicht kondensierten Alkyloxy- oder Aryloxy-Silanen als einem Vorläufer für die Komponente (B2) handelt es sich um Tetraorganyloxy-Silane (kurz auch als Organosilane bezeichnet) der allgemeinen Formel Si(OR¹)_{4.} R¹ sind organische Reste. Bevorzugt stellt R¹ unabhängig voneinander Alkyl- und/oder Arylreste dar. Besonders bevorzugt steht R¹ für verzweigte oder unverzweigte C₁- bis C₈-Alkylreste, insbesondere Methyl-, Ethyl-, n-Propyl-, i-Propyl- und/oder n-Butyl-Reste, steht. Zu den besonders bevorzugten Tetraorganyloxy-Silanen zählen Tetraethylorthosilikat und Tetramethylorthosilikat.

Diese Vorläufer werden insbesondere durch säure- oder basenkatalysierte Reaktion mit Wasser umgesetzt, wobei zunächst Hydrolyse und dann mit Fortschreiten der Reaktion zunehmend auch Kondensation zu den teilhydrolysierten und teilkondensierten Komponenten (B2) führen.

Die insbesondere aus der Sol-Gel-Chemie von Tetraethylorthosilikat bekannte Teil- oder Polykondensation der Tetraorganylsilane erfolgt in zwei Schritten. Zunächst findet in wässrigem Medium eine Hydrolyse, insbesondere säurekatalysierte Hydrolyse statt, wobei die organischen Reste teilweise abgespalten werden und Silanolgruppen entstehen. In einem darauf folgenden Schritt findet eine Kondensation über die Silanolgruppen statt. Bei den Komponenten (B) handelt es sich um Oligomere, bzw. niedere polymere Verbindungen dieser Hydrolyse/Kondensationsreaktion, die als Precursoren für ein [-Si(O-)₂-O-Si(O-)₂-O-]ₙ-Netzwerk wirken. Die teilkondensierten Alkyloxy- oder Aryloxy-Silane lassen sich durch die allgemeine Formel [-Si(OR²)₂-O-Si(OR²)₂-O-]ₙ beschreiben, wobei R² unabhängig voneinander R¹, oder weitere teilkondensierte Alkyloxy- oder Aryloxy-Silan-Reste darstellen können.

In bevorzugter Ausgestaltung werden als Komponente (B2) Mischung von Organpolysiloxanen mit Tetraethoxysilan (TEOS) oder "anhydrolisiertem" TEOS (z.B. DS 40 der Degussa AG) verwendet. Diese bilden mit den Silanolen ein anorganisches silikatisches Netzwerk (auch -O-Si-O -Si-Netzwerk), welches die Festigkeit, bzw. Kratzfestigkeit gegenüber mechanischen Einflüssen erhöht.

Für die Bildung der Komponente (B1), die ebenfalls als Si-O-Si-Netzwerkbildner auftritt, werden Organopolysilazane eingesetzt, die durch Ammonolyse von Dichlorsilanen (R₂SiCl₂) und einer nachfolgenden basenkatalysierten dehydrierenden Kupplung in polymerer Form entstehen.

Das allgemeine Schema der Organopolysilazane für R= CH₃ oder R= CH=CH₂ ist wie folgt:

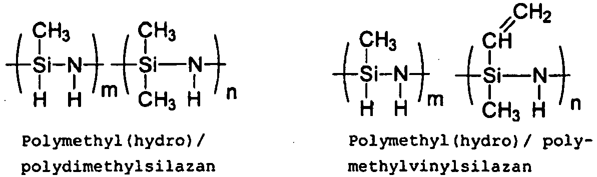

Als Rest R sind insbesondere kurzkettige Alkylreste oder Alkylenreste einzeln oder in Mischung von Bedeutung, insbesondere Methyl, Ethyl oder Vinyl, n-Propyl oder Propylen, iso-Propyl, n-Butyl oder n-Butylen, iso-Butyl oder iso-Butylen, oder tert.-Butyl.

In einer bevorzugten Ausgestaltung werden Polymethyl(hydro)/ Polydimethylsilazane eingesetzt, bei denen der Anteil der dimethyl-substituierten Gruppe bei 20-85% liegt.

In einer weiter bevorzugten Ausgestaltung werden Polymethyl(hydro)/Polymethylvinylsilazane eingesetzt, bei denen der Anteil der Methylvinyl-substituierten Gruppe bei 10-30% liegt.

Das Reaktionsschema für die Teilhydrolyse und Teilkondensation der Organopolysilazane ist vergleichbar mit demjenigen der Alkylalkoxysilanen.

Die zugrunde liegenden Reaktionen von Hydrolyse und Kondensation für die Polydimethylsilazan-Gruppe ist:

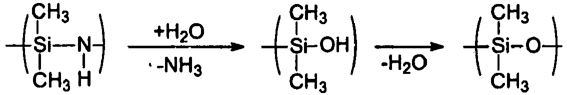

Als Folge der Hydrolysestufe entstehen reaktive Silanole, bzw. Silikone, die mit OH-Gruppen anderer Lackkomponenten reagieren können. Hierbei ist es von entscheidender Bedeutung, dass diese Silanole, bzw. Silikone ebenfalls sehr gut mit der Komponente (B2) reagieren und so eine dauerhafte Verankerung im -O-Si-O-Si-Netzwerk der Lackierung erfolgt.

Insbesondere der Anteil an Polymethylhydrosilazanen ist gut zum einkondensieren in das silikatische Netzwerk geeignet. Die Silanole bzw. Silikone haben eine stark hydrophobisierende Wirkung auf die Lackierung und tragen dadurch wesentlich zur schmutzabweisenden Funktion auf Rad-Lackeriungen bei.

In bevorzugter Ausgestaltung ist der Gewichtsanteil an der Komponente (B) an der Summe der reaktiven Komponenten (A) + (B) + (C) im Lack bei 5 bis 50 Gew.%. Besonders bevorzugt wird ein Gehalt von 10 bis 40 Gew.% eingestellt.

Das -O-Si-O-Si- Netzwerk wird über die angegebenen siliziumorganischen Precursoren während der thermischen Vernetzung des flüssigen Beschichtungsstoffes, bzw. Lacks gebildet. Es wird in das organische Netzwerk mechanisch und/oder chemisch eingebunden. Dabei enthält es noch eine ausreichende Konzentration an Silanol-Gruppen, die mit einseitig OH-terminierten Oberflächenadditiven z.B. durch Kondensation reagieren können.

Eine dritte Komponente (C) des Lacks wird durch lineare und/oder ringförmige Polysiloxane gebildet. Sie weisen die allgemeine Formel R³([-Si(R³)₂-O-]ₙ )-X auf, die auch für den speziellen Fall von Silsesquioxanen [(R³,X)-SiO_{3/2}]ₙ zutreffen soll. Dabei steht R³ unabhängig voneinander für Alkyl- oder Arylreste, entsprechend der oben ausgeführten Bezeichnung R¹ oder auch für fluorierte oder perfluorierte Alkyl- oder Arylreste. X steht für -Si(R⁴)₃ oder -Si(R³)(R⁴)₂ der-Si(R³)₂(R⁴), wobei R⁴ für Hydroxyalkyl- oder Hydroxyaryl-Rest steht.
R⁴ steht insbesondere für verzweigte oder unverzweigte C1-bis C8-Hydroxyalkylreste oder Dihydroxyalkylreste, insbesondere Hydroxymethyl-, Hydroxyethyl- oder Di-Hdroxy-Propyl-Reste.

In einer bevorzugten Ausgestaltung finden als R³ C5- bis C20-Polydimethylsiloxane Verwendung. Die Endgruppe in α-Stellung ist hierbei bevorzugt -Si(R³)₂(R⁴) mit R³ = Methyl oder Ethyl und R⁴ = -CH₂OH oder -CH₂-CH₂-OH.

In weiterer Ausgestaltung enthalten die Endgruppen X mehrfache Alkohole, insbesondere werden ein oder mehrere Reste R⁴ durch C3-bis C5- Alkyldiole, oder Glycerin gebildet.

Bei fluorierten Alkylen ist insbesondere nur die Endgruppe in ω-Stellung fluoriert oder perfluoriert. Beispielsweise kann ein α-Methoxy-ω-Trifluormethyl-Polydimethylsiloxan eingesetzt werden.

Bei den Aryl-haltigen Polysiloxanen trägt bevorzugt nur die Endgruppe in ω-Stellung eine oder mehrere ArylSubstituenten, insbesondere Phenyl-, Methylphenyl oder Toluyl-Substituenten, während die weiteren Reste R³ Alkyl-Reste darstellen, insbesondere Methyl- oder Ethyl-Reste.

Die Polysiloxane (C) haben bevorzugt ein mittlere Kettenlänge im Bereich von n=6 bis n=30 bzw. ein mittleres Molekulargewicht von 200 bis 80.000 g/mol. Besonders bevorzugt werden nur Polysiloxane mit gleicher Kettenlänge, insbesondere mit einer Kettenlänge von 8 bis 20 eingesetzt.

Auch die Polysiloxane (C) werden überwiegend chemisch in das anorganische und in das organische Netzwerk eingebunden. Dabei enthält das anorganische silikatische Netzwerk noch eine ausreichende Konzentration an Silanol-Gruppen, die mit einseitig OH-terminierten Polysiloxanen oder aber auch anderen Oberflächenadditiven z.B. durch Kondensation reagieren können.

Die Lacke lassen sich gut auf Substrate aus Kunststoffen, Metallen oder lackierten Oberflächen applizieren. So ist ein Auftragen auf die metallische Felge oder auch auf eine mit einem Basislack versehene Felge möglich.

Besonders gute Beschichtungen werden auf Metalloberflächen erreicht, wenn die metallische Oberfläche, eine Nano- oder Mikroschicht aus einem festhaftenden Metalloxid trägt.

Besonders vorteilhaft ist es Aluminium/Aluminiumlegierungs-Oberflächen vor der Beschichtung zu eloxieren, um eine festhafende Al₂O₃-Schicht zu bilden.

Ein weiterer Aspekt der Erfindung bezieht sich auf das Verfahren zur Verarbeitung des erfindungsgemäßen Lacks. Die wesentlichen Prozessschritte sind dabei,
- das Auftragen der Lacks mittels Tauch-, Streich- oder Sprühverfahren
- die Lufttrocknung der Lackschicht und
- das Einbrennen des Lacks bei einer Temperatur von 130 bis 180°C unter Polykondensation der teilkondensierten Komponenten (B) und Co-Kondensation mit den Polysiloxanen (C).

Als Auftragsverfahren sind die gängigen Streich- und Sprühverfahren sowie Tauchverfahren geeignet. Die geeignete Konsistenz der Lacke wird dabei vorteilhafterweise durch den Kondensationsgrad bzw. das Molekulargewicht der Kratzfestkomponenten (B) eingestellt.

Die frisch aufgetragene Lackschicht wird zunächst luftgetrocknet. Die Temperatur wird dabei so niedrig gehalten, dass keine merkliche Kondensation zwischen den Komponenten (B) und (C) stattfindet. Während dieser Phase verdampft das organische Lösungsmittel gegenüber dem Wasser bevorzugt, wodurch sich das Lösungsvermögen für die Komponente (C) verringert. Im flüssigen Beschichtungsstoff reichern sich diese Komponenten an der Oberfläche an und bewirken so eine Verringerung der Oberflächenenergie des ausgehärteten Beschichtungsstoffes. Die Anreicherung der als Hydrophobisierungskomponente wirkenden Komponente (C) in der Oberflächenschicht der Lackierung steigert den schmutzabweisenden Effekt der Lackierung erheblich.

Erst im darauf folgenden Schritt des Einbrennens des Lacks findet die Polykondensation der Komponenten (B) und insbesondere die Kondensation zwischen (B) und (C) statt. Durch die fest im Netzwerk gebundene Komponente (B1) verbleibt die Hydrophobie gleichmäßig und fest in der Tiefe der Lackierung verankert.

Für das Einbrennen wird eine Temperatur im Bereich von 110 bis 210°C gewählt. Dabei ist die Temperatur auch auf die Siedetemperatur der durch die Hydrolysereaktion der Komponente (B2) frei gesetzten Alkohole abzustimmen. Wird Polymethyl(hydro)polysilazan / Tetraethylorthosilikat als Ausgangsstoff für die Komponente (B) gewählt, so liegt die Temperatur bevorzugt bei 150 bis 180°C.

Wesentlicher Vorteil gegenüber den konventionellen Lackbeschichtungen ist die feste kovalente Bindung zwischen den Hydrophobisierungadditiven und den weiteren Komponenten des Lacks, insbesondere mit der Kratzfestkomponente sowie die fest ins silikatische Netzwerk gebundenen Silanole, bzw. Polysiloxane aus den Komponenten (B1). Es ist vorteilhaft, dass die methylsubstituierten Organosilazane nach Hydrolyse und Kondensation ein Si-O-Si-Netzwerk mit hydrophoben Eigenschaften ergeben. Dies ist eine Folge der kugelförmigen Anordnung von Methylgruppen an der Netzwerk-Oberfläche.

Nach dem Einbrennen liegt eine Lackierung vor mit einer organischen Binderkomponenten, einer polykondensierten Polymethyl(hydro)polysilazan /Alkyloxy- oder Aryloxy-Silan - Kratzfestkomponente, die ein [-Si(O-)₂-O-Si(O-)₂-O-]-Netzwerk bildet und mit einer Alkyl-, oder Aryl-Polysiloxan-basierten Hydrophobisierungskomponente. Die drei Komponenten sind im Wesentlichen kovalent über -Si-O-Si- Brücken aneinander gebunden sind und die Hydrophobisierungskomponente an der Lackoberseite angereichert und immobilisiert. Da das -Si-O-Si- Netzwerk makroskopisch in die durch das organische Bindemittelsystem erzeugte Bindemittelphase eingebunden ist, wird eine chemische Verankerung des Hydrophobisierungsadditivs erreicht. Das Oberflächenadditiv bleibt auch im polymeren Netzwerk wirksam. Seine Diffusion durch das organische Netzwerk wird durch die Fixierung am - Si-O-Si- Netzwerk ausgeschlossen. Eine Abreicherung durch Ausdiffundieren oder Auswaschen ist nahezu unmöglich. Es wird die erfindungsgemäße dauerhafte Hydrophobierung organischer Schichten erreicht.

Der Gehalt an nicht kovalent gebundenen Polysiloxan-basierten Hydrophobisierungskomponenten wird typischerweise unterhalb 0,01 Gew.% gesenkt.

### Beispiel 1

Zur prinzipiellen Darstellung der hydrophobierenden Wirkung der Komponente B1 wurde eine Mischung aus 19 Masse% Polymethyl(hydro)polysilazan/Polydimethylsilazan mit einem Dimethylsilazan-Anteil von 33% (ML33), 5 Masse% vorkondensiertem Tetraethoxysilan (DS 40), 15 Masse % eines Melaminharz/Acrylat-Binders und 1 Masse% eines Hydroxy(polyethylenoxy)propyl terminierten Polydimethylsiloxan (MCR-C13, Gelest Inc.) mit 60 Masse% Butylacetat als Lösungsmittel versetzt und mit einem Dissolver ca. 5 Minuten kräftig gerührt. Die Mischung wurde durch Spritzen aufgetragen und danach 20 Minuten bei 180 °C ausgehärtet. Die gehärtete Lackierung wies einen Wasserrandwinkel von ca. 102° und eine Oberflächenenergie von ca. 21 mN/m auf, während für den ursprünglichen Melaminharz/Acrylat-Lack ohne ML33 ein Wasserrandwinkel von ca. 90° und eine Oberflächenenergie von ca. 33 mN/m gemessen wurden. Sowohl vergleichsweise hoher Wasserrandwinkel als auch niedrige Oberflächenenergie spiegeln starke hydrophobe Oberflächeneigenschaften der Lackierung mit Komponente B1 gegenüber der ursprünglichen Lackierung wieder. Dabei kommt dem Wasserrandwinkel bei der Zielapplikation der schmutzabweisenden Beschichtungen auf Kraftfahrzeugrädern höhere Bedeutung zu als die Oberflächenenergie.

Anhand von Vergleichsversuchen wurde der Einfluss der Komponente B für unterschiedliche Lackzusammensetzungen I bis VI auf die wasserabweisende Wirkung untersucht. Die Vorgehensweise ist wie für Beispiel 1 beschrieben.

In der Tabelle 1 sind für Vergleichsversuche die Zusammensetzungen unterschiedlicher Lacke und die Wasserrandwinkel und Oberflächenenergien der korrespondierenden Lackierungen aufgeführt.

Dabei bedeuten:
ML33: Polymethyl(hydro)polysilazan/Polydimethylsilazan mit einem Dimethylsilazan-Anteil von 33%,
Dimethyl-Silazan ML85:
Polymethyl(hydro)/Polydimethylsilazanmit einem Dimethylsilazan-Anteil von 85%,
Methylvinyl-Silazan VL20:
Polymethyl(hydro)/Polymethylvinylsilazan mit einem Methylvinylsilazan-Anteil von 10-30%,
Polysiloxan MCR-C13: ein typisches Hydrophobilsierendes Polysiloxan
TEOS: nicht hydrolysiertes Tetraethylorthosilikat
DS 40: teilweise hydrolysiertes und oligomerisiertes TEOS

**Tabelle 1**

| Probenbezeichnung | I | II | III | IV | V | VI |
|---|---|---|---|---|---|---|
| Dimethyl-Silazan ML33/C33 | **1** | **1** | **1** | - | - | - |
| Dimethyl-Silazan ML85 | - | - | - | **1** | - | - |
| Methylvinyl-Silazan VL20 | - | - | - | - | **1** | - |
| Polysiloxan MCR-C13 | - | - | - | - | - | **1** |
| TEOS | **10** | **-** | **10** | **10** | **10** | **-** |
| Teilhydrolysiertes | **-** | **10** | **-** | **-** | **-** | **10** |
| TEOS | | | | | | |
| DS40 | | | | | | |
| organischer Binder | **73** | **73** | **73** | **73** | **73** | **73** |
| Ethanol | **16** | **16** | **16** | **16** | **16** | **16** |
| | | | | | | |
| Wasserrandwinkel | **92°** | **90°** | **92°** | **93°** | **89°** | **86°** |
| Oberflächenenergie (in Nm/m) | **28** | **34** | **29** | **28** | **33** | **30** |

Aus den Vergleichsversuchen ist ersichtlich, dass die Lackierungen mit Silazankoponenten (Versuche I bis V) im Vergleich zur Silazan-freien Probe VI durchweg hohe Wasserrandwinkel aufweisen. Die Messwerte der Oberflächenenergie zeigen zumindest für die Proben I, III und IV Werte unterhalb der Vergleichsprobe VI auf.

Für Radbeschichtungen hat sich beispielsweise der folgende Versiegelungslack ohne organischen Binder bewährt, der auch auf bereits gehärtetem Einbrennlack bzw. Pulverlack aufgetragen werden kann:

| Komponente | Anteil in Ma% |
|---|---|
| Organosilazan ML 33/C33 | 20 |
| Teilhydrolysiertes TEOS DS40 | 9 |
| OH-terminiertes Polysilan | 1 |
| Oberflächenenergie der gehärteten Beschichtung | 20,7 mN/m |

Als Einbrennlack auf Rädern hat sich beispielsweise der folgende Lack mit organischem Binder bewährt:

| Komponente | Anteil in Ma% |
|---|---|
| Organosilazan ML33/C33 | 19 |
| Teilhydrolysiertes TEOS DS40 | 5 |
| OH-terminiertes Polysilan | 1 |
| Organischer Binder | 15 |
| Lösungsmittel Butylacetat | 60 |
| Oberflächenenergie der gehärteten Beschichtung | 21 mN/m |
| | |

## Patentansprüche

1. Hydrophober und kratzfester Lack, insbesondere zur Beschichtung von metallischen Oberflächen, enthaltend
- (A) organische Binder mit freien -OH-Gruppen,
- (B) Netzwerkbildner welche während der Aushärtung der flüssigen Beschichtungen ein anorganisches Silikat-Netzwerk bilden aus Mischungen von
(B1) teilhydrolysierten und teilpolykondensierten Organosilazan-Mischungen,
(B2) teilhydrolysierten und teilpolykondensierten Organosilan-Mischungen,
- (C) Polysiloxane mit freien -OH-Gruppen
- Lösungsmittel und
- Additive
**dadurch gekennzeichnet, dass**
die organischen Binder (A) und die teilkondensierten Alkyloxy- oder Aryloxy-Silane (B2) reaktive ethylenisch ungesättigte Gruppen enthalten.

2. Lack nach Anspruch 1,
**dadurch gekennzeichnet, dass**
die reaktiven ethylenisch ungesättigten Gruppen, Vinyl- und/ oder (Meth)Acrylatgruppen enthalten.

3. Lack nach Anspruch 1,
**dadurch gekennzeichnet, dass**
die teilhydrolysierten und teilpolykondensierten Organosilazan-Mischungen aus Polyalky(hydro)polysilazanen hergestellt sind.

4. Lack nach Anspruch 1 oder 2,
**dadurch gekennzeichnet, dass**
der Gewichtsanteil der teilkondensierten Alkyloxy- oder Aryloxy-Silane (B2) an der Summe der reaktiven Komponenten (A) + (B) + (C) bei 5 bis 50% liegt.

5. Lack nach einem der vorangegangenen Ansprüche,
**dadurch gekennzeichnet, dass**
der Gewichtsanteil der Polysiloxane (C) an der Summe der reaktiven Komponenten (A) + (B) + (C) bei 0,5 bis 25% liegt.

6. Lack nach einem der vorangegangenen Ansprüche,
**dadurch gekennzeichnet, dass**
die nicht kondensierten Alkyloxy- oder Aryloxy-Silane die allgemeine Formel Si(OR¹)₄ aufweisen, wobei R¹ unabhängig voneinander Alkyl- und/oder Arylreste darstellen.

7. Lack nach Anspruch 5,
**dadurch gekennzeichnet, dass**
die teilkondensierten Alkyloxy- oder Aryloxy-Silane die allgemeine Formel [-Si(OR²)₂-O-Si(OR²)₂-O-]ₙ aufweisen, wobei R² unabhängig voneinander R¹, oder teilkondensierte Alkyloxy- oder Aryloxy-Silan-Reste darstellen können.

8. Lack nach Anspruch 6,
**dadurch gekennzeichnet, dass**
bei den Substituenten R² das Verhältnis von [ Silanol- und teilkondensiertem Alkyloxy- und Aryloxy-Silan-Rest ] zu [Alkyl- und Aryl-Rest] oberhalb 30 liegt.

9. Lack nach einem der vorangegangenen Ansprüche,
**dadurch gekennzeichnet, dass**
die teilkondensierten Alkyloxy- oder Aryloxy-Silane (B2) ein mittleres Molekulargewicht von 200 bis 80.000 g/mol aufweisen.

10. Lack nach einem der vorangegangenen Ansprüche,
**dadurch gekennzeichnet, dass**
die teilpolykondensierten Organosilazan-Mischungen aus Polyalky(hydro)polysilazanen hergestellt sind, bei denen die Alkylreste ausgewählt sind aus Methyl, Ethyl oder Vinyl, n-Propyl oder Propylen, iso-Propyl, n-Butyl oder n-Butylen, iso-Butyl oder iso-Butylen, oder tert.-Butyl.

11. Lack nach einem der vorangegangenen Ansprüche,
**dadurch gekennzeichnet, dass**
für die Komponente B1 Polymethyl(hydro)/Polydimethylsilazane eingesetzt sind, bei denen der Anteil der dimethyl-substituierten Gruppe bei 20-85% liegt.

12. Lack nach einem der vorangegangenen Ansprüche,
**dadurch gekennzeichnet, dass**
die Polysiloxane (C) die allgemeine Formel R³([-Si(R³)₂-O-]ₙ )-X aufweisen, wobei R³ unabhängig voneinander Alkyl- oder Arylreste (R¹) oder fluorierte oder perfluorierte Alkyl- oder Arylreste sind
Und X = -Si(R⁴)₃ oder -Si(R³)(R⁴)₂ oder -Si(R³)₂(R⁴) mit R⁴ = Hydroxyalkyl- oder Hydroxyaryl-Rest bedeutet.

13. Lack nach einem der Ansprüche 5 bis 12,
**dadurch gekennzeichnet, dass**
R¹ für verzweigte oder unverzweigte C₁- bis C₈-Alkylreste, insbesondere Methyl-, Ethyl-, n-Propyl-, i-Propyl- und/oder n-Butyl-Reste, steht.

14. Lack nach einem der Ansprüche 12 oder 13,
**dadurch gekennzeichnet, dass**,
R³ für Methyl- oder Ethyl-Reste steht.

15. Lack nach einem der Ansprüche 12 bis 14,
**dadurch gekennzeichnet, dass**,
R⁴ für verzweigte oder unverzweigte C₁- bis C₈-Hydroxyalkylreste oder Dihydroxyalkylreste, insbesondere Hydroxymethyl-, Hydroxyethyl- oder Di-Hdroxy-Propyl-Reste, steht.

16. Lack nach einem der voran gegangenen Ansprüche,
**dadurch gekennzeichnet, dass**
die Polysiloxane (C) ein mittlere Kettenlänge im Bereich von n=6 bis n=30 haben.

17. Lack nach einem der voran gegangenen Ansprüche,
**dadurch gekennzeichnet, dass**
die organischen Binder (A) aus Harnstoff- und Melaminformaldehyd-harzen, Alkydharzen, Acrylharzen, Polyestern oder modifizierten Polyestern, Epoxidharzen, Polyisocyanaten und/oder Acrylaten, insbesondere den Systemen Acrylat/Melamin-, Polyester/Melamin-, Alkyd/Melamin-, oder selbstvernetzenden Acrylat- und Epoxid-Harzen, bestehen.

18. Verfahren zur Herstellung einer Lackierung mit einem Lack nach einem der Ansprüche 1 bis 17, umfassend die Schritte,
- Auftragen der Lacks mittels Streich- oder Sprühverfahren
- Lufttrocknung der Lackschicht und
- Einbrennen des Lacks bei einer Temperatur von 130 bis 180°C unter Polykondensation der teilkondensierten Siloxane (B) und Co-Kondensation mit den Polysiloxanen (C).

19. Lackierung auf Kraftfahrzeugrädern zur Verringerung der Bremsstaubhaftung, umfassend eine organische Binderkomponente, eine polykondensierte Alkyloxy- oder Aryloxy-Silan Kratzfestkomponente, die ein [-Si(O-)₂-O-Si(O-)₂-O-]-Netzwerk bildet, eine polykondensierte Organosilazan-Komponente, die an das [-Si(O-)₂-O-Si(O-)₂-O-]-Netzwerk gebunden ist und eine Alkyl-, oder Aryl-Polysiloxan-basierte Hydrophobisierungskomponente, gemäß einem der Ansprüche 1 bis 16,
wobei die vier Komponenten im wesentlichen kovalent über -Si-O-Si- Brücken aneinander gebunden sind und die Hydrophobisierungskomponente an der Lackoberseite angereichert und immobilisiert vorliegt,
**dadurch gekennzeichnet, dass**
der Gehalt an nicht kovalent gebundenen Polysiloxan-basierten Hydrophobisierungskomponenten unterhalb 0,01 Gew.% liegt.

## Claims

1. Hydrophobic and scratch-resistant paint, in particular for coating metallic surfaces, containing
- (A) organic binders with free OH groups,
- (B) network formers which, in the hardening process of the liquid coatings, form an inorganic silicate network from mixtures of
(B1) partially hydrolysed and partially polycondensed organosilazane mixtures,
(B2) partially hydrolysed and partially polycondensed organosilane mixtures,
- (C) polysiloxanes with free OH groups
- solvent and
- additive,
**characterised in that**
the organic binders (A) and the partially condensed alkyloxy- or aryloxy-silanes (B2) contain reactive groups which are ethylene-unsaturated.

2. Paint according to claim 1,
**characterised in that**
the ethylene-unsaturated reactive groups contain vinyl and/or (meth)acrylate groups

3. Paint according to claim 1,
**characterised in that**
the partially hydrolysed and partially polycondensed organosilazane mixtures are produced from polyalky(hydro)polysilazanes.

4. Paint according to claim 1 or 2,
**characterised in that**
the percentage by weight of the partially condensed alkyloxy- or aryloxy-silanes (B2) within the sum of the reactive components (A) + (B) + (C) amounts to 5% to 50%.

5. Paint according to any of the preceding claims,
**characterised in that**
the percentage by weight of the polysiloxanes (C) within the sum of the reactive components (A) + (B) + (C) amounts to 0.5% to 25%.

6. Paint according to any of the preceding claims,
**characterised in that**
the non-condensed alkyloxy- or aryloxy-silanes have the general formula Si(OR¹)₄, wherein R¹ independently represents alkyl or aryl residues.

7. Paint according to claim 5,
**characterised in that**
the partially condensed alkyloxy- or aryloxy-silanes have the general formula [-Si(OR²)₂-O-Si(OR²)₂-O-]ₙ, wherein R² can independently represent R¹ or partially condensed alkyloxy- or aryloxy-silane residues.

8. Paint according to claim 6,
**characterised in that**
in the substituents R², the ratio between [silanol and partially condensed alkyloxy- or aryloxy-silane] and [alkyl and aryl residue] is above 30.

9. Paint according to any of the preceding claims,
**characterised in that**
the partially condensed alkyloxy- or aryloxy-silanes (B2) have an average molecular weight of 200 to 80 000 g/mol.

10. Paint according to any of the preceding claims,
**characterised in that**
the partially polycondensed organosilazane mixtures are produced from polyalky(hydro)polysilazanes, wherein the alkyl residues are selected from methyl, ethyl or vinyl, n-propyl or propylene, iso-propyl, n-butyl or n-butene or iso-butene or tert.-butyl.

11. Paint according to any of the preceding claims,
**characterised in that**
for the B1 component,
polymethyl(hydro) / polydimethyl silazanes are used, wherein the proportion of the dimethyl-substituted group amounts to 20% to 85%.

12. Paint according to any of the preceding claims,
**characterised in that**
the polysiloxanes (C) have the general formula R³([-Si(R³)₂-O-]ₙ)-X, wherein R³ are independently of each other alkyl or alyl residues (R²) or fluorinated or perfluorinated alkyl or alyl residues and wherein X = -Si(R⁴)₃ or -Si(R³)(R⁴)₂ or -Si(R³)₂(R⁴), with R⁴ = hydroxyalkyl or hydroxyalyl residue.

13. Paint according to any of claims 5 to 12,
**characterised in that**
R¹ represents branched or non-branched C₁ to C₈ alkyl residues, in particular methyl, ethyl, n-propyl, i-propyl and/or n-butyl residues.

14. Paint according to claim 12 or 13,
**characterised in that**
R³ represents methyl or ethyl residues.

15. Paint according to any of claims 12 to 14,
**characterised in that**
R⁴ represents branched or non-branched C₁ to C₈ hydroxyalkyl residues or dihydroxyalkyl residues, in particular hydroxymethyl, hydroxyethyl or dihydroxypropyl residues.

16. Paint according to any of the preceding claims,
**characterised in that**
the polysiloxanes (C) have an average chain length in the range between n=6 and n=30.

17. Paint according to any of the preceding claims,
**characterised in that**
the organic binders (A) consist of urea and melamine formaldehyde resins, alkyd resins, acryl resins, polyesters or modified polyesters, epoxy resins, polyisocyanates and/or acrylates, in particular of the acrylate/melamine, polyester/melamine, alkyd/melamine or self-crosslinking acrylate and epoxy resin systems.

18. Method for producing a coating with a paint according to any of claims 1 to 17, comprising the steps of
- applying the paint in a painting or spraying process
- air-drying the paint layer and
- stoving the paint at a temperature of 130°C to 180°C accompanied by the polycondensation of the partially condensed siloxanes (B) and co-condensation with the polysiloxanes (C).

19. Paint coating on motor vehicle wheels to reduce brake dust adhesion, comprising an organic binder component, a polycondensed scratch resistant alkyloxy- or aryloxy-silane component which forms an [Si(O-)₂-O-Si(O-)₂-O-] network, a polycondensed organosilazane component bonded to the [Si(O-)₂-O-Si(O-)₂-O-] network and an alkyl- or aryl-polysiloxane-based hydrophobing component, according to any of claims 1 to 16,
wherein the four components are substantially covalent-bonded via -Si-O-Si- bridges and the hydrophobing component is present on the top side of the coating in an enriched and immobilised form,
**characterised in that**
the content of polysiloxane-based hydrophobing components which are not covalent-bonded is less than 0.01 % by weight.

## Revendications

1. Peinture hydrophobe et résistante à la rayure, en particulier pour le revêtement de surfaces métalliques, comprenant :
- (A) des liants organiques à groupes OH libres,
- (B) des agents réticulants formant, pendant le durcissement des revêtements liquides, un réseau de silicate inorganique formé de mélanges de
- (B1) mélanges organosilazanes partiellement hydrolysés et partiellement polycondensés ;
- (B2) mélanges organosilanes partiellement hydrolysés et partiellement polycondensés ;
- (C) un polysiloxane à groupes -OH libres
- un solvant aqueux et
- des additifs
**caractérisée en ce que** les liants inorganiques (A) et les alkyloxysilanes ou aryloxysilanes (B2) partiellement condensés contiennent des groupes éthyléniquement insaturés réactifs.

2. Peinture selon la revendication 1, **caractérisé en ce que** les groupes éthyléniquement insaturés réactifs contiennent des groupes acrylate de vinyle et/ou méthacrylates.

3. Peinture selon la revendication 1, **caractérisée en ce que** les mélanges organosilazanes partiellement hydrolysés et partiellement polycondensés sont fabriqués à partir de polyalky(hydro)polysilazanes.

4. Peinture selon la revendication 1 ou 2, **caractérisée en ce que** la fraction pondérale des alkyloxysilanes ou des aryloxysilanes (B1) partiellement condensés est de 5 à 50 % de la somme des constituants réactifs (A) + (B) + (C).

5. Peinture selon l'une quelconque des revendications précédentes, **caractérisée en ce que** la fraction pondérale des polysiloxanes (C) est de 0,5 à 25 % de la somme des constituants réactifs (A) + (B) + (C).

6. Peinture selon l'une quelconque des revendications précédentes, **caractérisée en ce que** les alkyloxysilanes ou les aryloxysilanes non condensés présentent la formule générale Si(OR¹)₄, R¹ représentant indépendamment les uns des autres des groupes alkyle et/ou aryle.

7. Peinture selon la revendication 5, **caractérisée en ce que** les alkyloxysilanes ou les aryloxysilanes non condensés présentent la formule générale [-Si(OR²)₂-O-Si (OR²)₂-O-]ₙ, R² indépendamment les uns des autres pouvant représenter R¹, ou des groupes alkyloxy ou aryloxysilanes.

8. Peinture selon la revendication 6, **caractérisée en ce que** pour les substituants R² la proportion de [ groupe silanol et alkyloxysilane partiellement condensé et aryloxysilanes] par rapport au [groupe alkyle et aryle] est supérieure à 30.

9. Peinture selon l'une quelconque des revendications précédentes, **caractérisée en ce que** les alkyloxysilanes ou aryloxysilanes (B2) présentent un poids moléculaire moyen de 200 à 80.000 g/mol.

10. Peinture selon l'une quelconque des revendications précédentes, **caractérisée en ce que** les mélanges organosilanes partiellement condensés sont fabriqués à partir de polyalky(hydro)polysilasanes, dans lesquels les groupes alkyle sont sélectionnés parmi méthyle, éthyle ou vinyle, n-propyle ou propylène, iso-propyle, n-butyle ou n-butylène, iso-butyle ou iso-butylène ou tert-butyle.

11. Peinture selon l'une quelconque des revendications précédentes, caractérisée en ce pour les constituants B1 des polyméthyl(hydro)/polydiméthylsilazanes sont utilisés, dans lesquels la proportion du groupe substitué de diméthyle est de 20 à 85%.

12. Peinture selon l'une quelconque des revendications précédentes, caractérisée en 3 3 ce que les polysiloxanes (C) présentent la formule générale R³([-Si(R³)₂-O-]ₙ)-X, R indépendamment des uns des autres sont des groupes alkyle ou aryle (R¹) ou 4 des groupes alkyle ou aryle fluorés ou perfluorés et X désigne = -Si(R⁴)₃ ou-3 4 3 4 4 Si(R³)(R⁴)₂ ou -Si(R³)₂(R⁴) avec R⁴ = groupe hydroxyalkyle ou hydroxyaryle.

13. Peinture selon l'une quelconque des revendications 5 à 12, caractérisée en ce 1 que R désigne des groupes alkyle en Ci à Cg ramifiés ou non ramifiés, en particulier des groupes méthyle, éthyle, n-propyle, i-propyle et/ou n-Butyle.

14. Peinture selon la revendication 12 ou 13, **caractérisée en ce que** R désigne des groupes méthyle ou éthyle.

15. Peinture selon l'une quelconque des revendications 12 à 14, **caractérisée en ce que** R⁴ désigne des groupes hydroxyalkyle ou dihydroxyalkyle ramifiés ou non ramifiés en Ci à Ce, en particulier des groupes hydroxyméthyle, hydroxyéthyle ou dihydroxy-propyle.

16. Peinture selon l'une quelconque des revendications précédentes, **caractérisée en ce que** les polysiloxanes (C) ont une longueur moyenne de chaîne dans la plage de n=6 à n=30.

17. Peinture selon l'une quelconque des revendications précédentes, **caractérisée en ce que** les liants organiques (A) sont constitués de résines de mélamine-formaldéhyde et d'urée, de résines alkydes, de résines acryles, de polyesters ou de polyesters modifiés, de résines époxy, de polyisocyanates et/ou d'acrylates, en particulier des systèmes de résines d'acrylate/mélamine, de polyester/mélamine, d'alkyde/mélamine, ou d'acrylate autoréticulant et époxydes.

18. Procédé de fabrication d'une revêtement à l'aide d'une peinture selon l'une des revendications 1 à 17, comprenant les étapes suivantes :
- application de la peinture au moyen d'un procédé de couchage ou de pulvérisation
- séchage à l'air de la couche de peinture et
- cuisson de la peinture à une température comprise entre 130 et 180°C dans des conditions de polycondensation des siloxanes (B) partiellement condensés et dans des conditions de co-condensation avec des polysiloxanes (C).

19. Revêtement sur des roues de véhicule automobile destiné à réduire l'adhérence de la poussière sur les freins comprenant un constituant liant organique, un constituant résistant à la rayure d'alkyloxysilane ou d'aryloxysilane polycondensé, qui forme un réseau [-Si(O-)₂-O-Si(O-)₂-O-], un constituant d'organosilazane polycondensé qui est relié au réseau [-Si (0-)2-O-Si(0-)2-0-] et un constituant d'imperméabilisation à base d'alkylpolysiloxane ou d'arylpolysiloxane, selon l'une des revendications 1 à 16, les quatres constituants sont liés les uns aux autres essentiellement par covalence par des ponts -Si-O-Si- et le constituant d'imperméabilisation est enrichi et immobilisé sur la face supérieure de la peinture, **caractérisé en ce que** la teneur en constituants d'imperméabilisation à base de polysiloxane reliés de manière non covalente est inférieure à 0,01 % en poids.
